# EUROPÄISCHE PATENTANMELDUNG

(11) **EP 2 489 296 A2**
(43) Veröffentlichungstag der Anmeldung: **22.08.2012**
(21) Anmeldenummer: 12401022.4
(22) Anmeldetag: 14.02.2012
(51) Int. Cl.: A47L 15/00

(54) **Verfahren zum Füllen eines Behandlungsraums eines wasserführenden Haushaltgeräts**

(30) Priorität: 16.02.2011 DE 102011000759
(71) Anmelder: Miele & Cie. KG, 33332 Gütersloh (DE)
(72) Erfinder: Drücker, Markus, 33335 Gütersloh (DE); Steinmeier, Ralph, 32052 Herford (DE); Wegener, Dirk, 33649 Bielefeld (DE)

(57) **Zusammenfassung**

Verfahren zum Füllen eines Behandlungsraums eines wasserführenden Haushaltgeräts Die Erfindung betrifft ein Verfahren zum Füllen eines Behandlungsraums (2) eines wasserführenden Haushaltgeräts, insbesondere einer Geschirrspülmaschine (1), mit einer Gesamt-Flüssigkeitsmenge, wobei die Flüssigkeit über einen Speicherbehälter (3) dem Behandlungsraum (2) zugeleitet wird und wobei der Speicherbehälter (3) lediglich einen Teil der in den Behandlungsraum (2) gefüllten Gesamt-Flüssigkeitsmenge fasst. Um die Befüllung des Behandlungsraums über den Speicherbehälter zu beschleunigen, werden folgende Verfahrensschritte durchgeführt:
a) wenigstens annähernd vollständiges Füllen des Speicherbehälters (3);
b) Entleeren einer Teilmenge des Speicherbehälters (3) in den Behandlungsraum (2);
c) Auffüllen der entleerten Teilmenge;
d) gegebenenfalls Wiederholen der Verfahrensschritte b) und c), bis sich die Gesamt-Flüssigkeitsmenge abzüglich des Speicherbehältervolumens im Behandlungsraum (2) befindet;
e) vollständiges Entleeren des Speicherbehälters (3) in den Behandlungsraum (2).

## Beschreibung

### Beschreibung

### Verfahren zum Füllen eines Behandlungsraums eines wasserführenden Haushaltgeräts

Die Erfindung betrifft ein Verfahren zum Füllen eines Behandlungsraums eines wasserführenden Haushaltgeräts, insbesondere einer Geschirrspülmaschine, mit einer Gesamt-Flüssigkeitsmenge, wobei die Flüssigkeit über einen Speicherbehälter dem Behandlungsraum zugeleitet wird und wobei der Speicherbehälter lediglich einen Teil der in den Behandlungsraum gefüllten Gesamt-Flüssigkeitsmenge fasst.

Aus der DE 197 58 061 C2 ist eine Geschirrspülmaschine bekannt, bei der wärmeleitend zu einem Behandlungsraum ein Vorratsbehälter angeordnet ist. Ein solcher Behälter kann mit kalter Flüssigkeit (Frischwasser oder enthärtetem Weichwasser) gefüllt werden und dadurch während eines Trocknungsprogrammabschnitts die Kondensation von warmer, feuchter Luft an der benachbarten Wand des Behandlungsraums unterstützen.

Aus der DE 10 2004 057 017 A1 ist eine Geschirrspülmaschine mit einem Speicherbehälter für Spülflotte bekannt. Bei dieser Geschirrspülmaschine wird zum Ende eines wasserführenden Programmabschnitts, insbesondere nach dem Klarspülen, die im Spülraum befindliche Flotte nicht in den Abfluss entleert, sondern in den Speicherbehälter geleitet und dort bis zum nächsten wasserführenden Programmabschnitt, gegebenenfalls im nächsten Programm, aufbewahrt und dann wiederverwendet.

Ein Flüssigkeitseinlauf, bei dem der Speicherbehälter in den Spülraum entleert wird, dauert in der Regel länger als das Einfüllen von Frischwasser aus einem Hauswasseranschluss. Gründe hierfür sind der geringe Druck, der sich nur aus der geodätischen Höhe des Wasserpegels im Speicherbehälter ergibt, sowie Widerstände von Leitungen, Ventilen und im Fall einer Frischwasserspeicherung einer nachgeordneten Enthärtungseinrichtung. Hierdurch verlängert sich die Laufzeit eines Programms, bei dem eine Benutzung von Flüssigkeit aus dem Speicherbehälter stattfindet.

Der Erfindung stellt sich somit Problem, bei einem Verfahren der eingangs genannten Art die Befüllung des Behandlungsraums über den Speicherbehälter zu beschleunigen.

Erfindungsgemäß wird dieses Problem durch ein Verfahren mit den Merkmalen des Patentanspruchs 1 gelöst.

Dadurch, dass erfindungsgemäß nur eine Teilmenge aus dem Speicherbehälter entleert und dieser so oft wie möglich wieder aufgefüllt wird, wird die geodätische Höhe des Flüssigkeitsspiegels im Speicherbehälter hoch gehalten und dessen Auslauf beschleunigt.

Vorteilhafte und zweckmäßige Ausgestaltungen und Weiterbildungen der Erfindung ergeben sich aus den nachfolgenden Unteransprüchen.

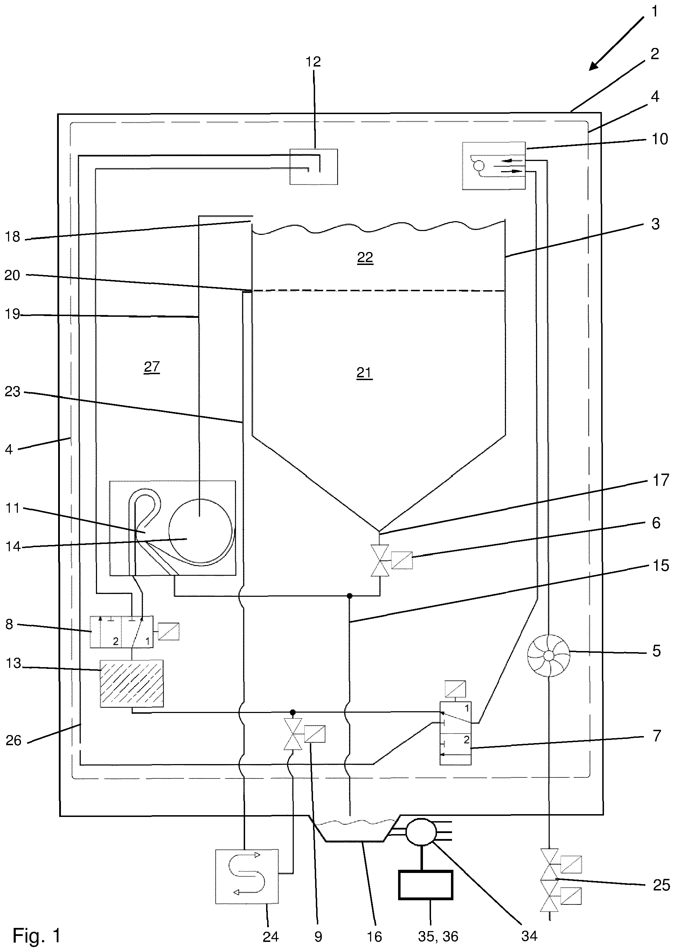

Verschiedene Ausführungsbeispiele der Erfindung sind in den Zeichnungen rein schematisch dargestellt und werden nachfolgend näher beschrieben. Die Figuren 1 bis 3 zeigen unterschiedliche Ausführungsbeispiele eines erfindungsgemäß gestalteten Haushaltgeräts anhand einer Geschirrspülmaschine. Dabei sind nach Art eines Flussdiagramms aufgebaute Schemaskizzen mit den für den Wasserlauf der Geschirrspülmaschine wichtigen Bauteilen dargestellt.

Die in Figur 1 dargestellte Spülmaschine 1 besitzt einen durch einen Kasten symbolsierten Spülraum 2 als Behandlungsraum. Neben diesem ist in bekannter Weise ein Speicherbehälter 3 angeordnet. Der Speicherbehälter 3 steht in wärmeleitender Verbindung mit dem Spülraum 2. Er ist Bestandteil einer durch einen gestrichelten Kasten symbolisierten Wassertasche 4. Weitere in die Wassertasche 4 integrierte Bauteile sind ein Flügelradzähler 5, vier Ventile, nämlich ein Speicherauslaufventil 6, ein Umschaltventil 7 zur Steuerung der Spülwasserhärte (siehe EP 1 080 681 A2), ein weiteres Umschaltventil 8 und ein Regenerierventil 9, drei Wasserschutzeinrichtungen 10 bis 12 und ein Harzbehälter 13 einer Enthärtungseinrichtung. Die Wassertasche 4 ist fluidtechnisch über die zweite Wasserschutzeinrichtung 11 und über den Speicherbehälter 3 mit dem Spülraum 2 verbunden. Wasserschutzeinrichtungen werden durch freie Fließstrecken gebildet, die den Vorschriften der DVGW genügen und ein Rücksaugen von Spülflüssigkeit in die Leitungen der Hauswasserversorgung verhindern sollen. Die Verbindung über die zweite Wasserschutzeinrichtung 11 mündet in eine Spülraumbelüftung 14 im unteren Bereich einer Spülraumseitenwand 27. Die Verbindung über den Speicherbehälter 3 ist eine Schlauchverbindung 15 und mündet in einen Sammeltopf 16, der den Spülraum 2 nach unten abschließt. Der Auslauf 17 des Speicherbehälters 3 über die Schlauchverbindung 15 ist durch das Speicherablaufventil 6 steuerbar. Darüber hinaus ist der Speicherbehälter 3 mit einem Überlauf 18 versehen, der über eine Leitung 19 in Form einer Schlauchverbindung oder eines Kanals auch in die Spülraumbelüftung 14 mündet. Neben dem Auslauf 17 besitzt der Speicherbehälter 3 einen zweiten Auslauf 20. Dieser zweigt seitlich aus dem Speicherbehälter 3 ab und trennt so ein Flottenvolumen 21 unter dem Auslauf 20 und ein Regeneriervolumen 22 über dem Auslauf 20. Das Regeneriervolumen 22 stellt auf diese Weise eine definierte Wassermenge bereit und ist durch eine Leitung 23 in Form einer Schlauchverbindung oder eines Kanals einem Salzbehälter 24 einer Regeneriereinrichtung zuleitbar. Die Entleerung des Regeneriervolumens 22 wird durch das Regenerierventil 9 gesteuert, welches dem Salzbehälter 24 strömungsmäßig nachgeschaltet ist. Bei geöffnetem Regenerierventil 9 durchfließt die im Salzbehälter 24 aus Salz und Wasser erzeugte Sole den Harzbehälter 13, regeneriert das Ionenaustauscherharz und fließt über die zweite Wasserschutzeinrichtung 11 in den Sammeltopf 16 und damit in den unteren Bereich des Spülraums 2. Hierzu muss das zweite Umschaltventil 8 sich in Stellung "1" befinden. Anschließend wird die Sole aus dem Ionenaustauscherharz mit Wasser ausgespült, hierzu ist das Wassereinlaufventil 25 geöffnet und beide Umschaltventile 7 und 8 befinden sich in Stellung "1".

Der Wassereinlauf zum Spülraum 2 oder zum Speicherbehälter 3 erfolgt aus der Hauswasserversorgung über ein Wassereinlaufventil 25. Mit einem Flügelradzähler 5 wird die zugelaufene Wassermenge ermittelt. Es schließt sich die erste Wasserschutzreinrichtung 10 an. Über das erste Umschaltventil 7 wird das Wasser entweder dem Harzbehälter 13 (Stellung "1") oder direkt dem Speicherbehälter 3 (Stellung "2") zugeleitet. Das zweite Umschaltventil 8 leitet das enthärtete Weichwasser entweder dem Spülraum 2 (in Stellung "1", über die zweite Wasserschutzeinrichtung 11 und die Spülraumbelüftung 14) oder dem Speicherbehälter 3 (in Stellung "2", über die dritte Wasserschutzeinrichtung 12) zu.

Durch die vorbeschriebene Ausbildung der Wassertasche 4 sind folgende Wasserwege möglich:
1. Befüllung des Speicherbehälters 3 mit Frischwasser - erstes Umschaltventil 7 in Stellung "2", zweites Umschaltventil 8 beliebig;
2. Befüllung des Speicherbehälters 3 mit enthärtetem Weichwasser - erstes Umschaltventil 7 in Stellung "1", zweites Umschaltventil 8 in Stellung "2";
3. Direkte Befüllung des Spülraums 2 mit enthärtetem Weichwasser - beide Umschaltventile 7 und 8 in Stellung "1";
4. Direkte Befüllung des Spülraums 2 mit Frischwasser - erstes Umschaltventil 7 in Stellung "2", wahlweise Überfüllung des Speicherbehälters 3 oder geöffnetes Speicherablaufventil 6;
5. Regenerieren des Ionenaustauscherharzes - Speicherbehälter 3 gefüllt, Speicherablaufventil 6 geschlossen, Regenerierventil 9 geöffnet, Umschaltventil 7 in Stellung "2", Umschaltventil 8 in Stellung "1", über zweite Wasserschutzeinrichtung 11;
6. Entleeren des Speicherbehälters 3 in den Spülraum 2 - Speicherablaufventil 6 geöffnet.

Um eine direkte Befüllung des Spülraums 2 mit Frischwasser unter Umgehung des Speicherbehälters 3 zu ermöglichen, kann die als Schlauchverbindung oder als Kanal ausgeführte Leitung 26 vom ersten Umschaltventil 7 (Stellung "2") nicht zur dritten Wasserschutzeinrichtung 12, sondern zur zweiten Wasserschutzeinrichtung 11 verlegt sein (nicht in der Figur 1 dargestellt). Dadurch werden Kalkablagerungen im Speicherbehälter 3 verhindert. Es ist dann allerdings die Variante 1. (Befüllung des Speicherbehälters 3 mit Frischwasser) nicht durchführbar. Üblicherweise wird dem enthärteten Weichwasser zur Glasschonung (sehr weiches Wasser löst Kalzium-Ionen aus dem Glas und macht es blind) ein Frischwasseranteil zugesetzt. Dieses Verschneiden kann durch Kombination der Varianten 1 und 2 bzw. 3 und 4. erreicht werden.

Im Folgenden ist ein Verfahrensablauf beschrieben, bei dem der Speicherbehälter 3 gefüllt und anschließend das gespeicherte Wasser verwendet wird:
Der Speicherbehälter 3 wird zu Beginn eines Programmabschnitts Trocknen in einem ersten Programm mit kaltem Wasser (Weichwasser, Frischwasser oder vorzugsweise verschnittenes Weichwasser) bis zum Überlauf 18 gefüllt und dient somit als Kondensationsfläche der angrenzenden Spülraumseitenwand 27 zur Trocknungsunterstützung. Da die Trocknungsleistung mit kaltem Wasser recht gut ist, kann in diesem Fall auf eine Gebläsetrocknung verzichtet und die elektrische Energie zum Antrieb des Gebläses (nicht dargestellt) eingespart werden. Bei Geräten mit automatischer Türöffnung (EP 1 733 675 A2) wird zur Arbeitsplattenvorwärmung bzw. Arbeitsplattenbelüftung jedoch weiterhin ein Gebläse benötigt, siehe auch DE 10 2007 008 950 A1.

Bei der Ausführung des Programmabschnitts Reinigen im nächsten Programm wird dann das Wasser aus dem Speicherbehälter 3 in den Sammeltopf 16 abgelassen. Wenn der Speicherbehälter 3 lediglich eine Teilmenge der benötigten Wassermenge fasst, wird der Rest über die Wasserzuleitung direkt eingelassen. Somit steht statt kaltem Wasser aus der Wasserleitung (nach Norm 15°C) wenigstens eine Teilwassermenge zur Verfügung, die mindestens Raumtemperatur (nach Norm 23°C) aufweist. Dadurch erhöht sich die Mischtemperatur des einlaufenden Wassers und es wird weniger Zeit und Energie zum Aufheizen auf ein bestimmtes Temperaturniveau benötigt.

Im Programmabschnitt Reinigen wird der geleerte Behälter 3 zum Ende der Haltezeit, einer Zeit, in der die gewünschte Spülflüssigkeits-Temperatur erreicht ist, wieder bis zum Überlauf 18 befüllt und das Wasser erwärmt sich aufgrund der Kontaktfläche des Speicherbehälters 3 zur Spülraumseitenwand 27. Das Temperaturniveau im Spülraum 2 sinkt dadurch minimal ab. Im nächsten Programmschritt Zwischenspülen wird dann das Wasser aus dem Speicherbehälter 3 abgelassen und ggfs. mit kaltem Wasser ergänzt. Es erhöht sich die Mischtemperatur der Spülflüssigkeit. Direkt danach wird der Speicherbehälter 3 wieder bis zum Überlauf 18 befüllt und das Wasser wärmt sich aufgrund des noch immer höher gelegenen Temperaturniveaus im Spülraum 2 auf. Zu Beginn des anschließenden Programmschrittes Klarspülen wird wiederum der Speicherbehälter 3 entleert und kaltes Wasser ergänzt. Das anschließende Aufheizen der Spülflüssigkeit bis zur gewünschten Temperatur erfordert somit weniger Zeit und Energie. Die letzte Befüllung des Speicherbehälters 3 ist die schon anfangs erwähnte Befüllung im Programmabschnitt Trocknen.

Bei kurzen Zwischenspülgängen (ca. < 10 min) kann alternativ auf das Leeren und Befüllen des Speicherbehälters 3 im Zwischenspülgang verzichtet werden, da die Kontaktzeit und somit der Wärmeübergang hierbei nicht ausreichend sind. Das gespeicherte Wasser aus dem Reinigungsgang fließt dann erst zu Beginn des Klarspülgangs ein.

Das Regenerieren des Ionenaustauscherharzes erfolgt, wenn es erschöpft ist. Die Erschöpfung kann durch einen Sensor (nicht dargestellt) im Harzbehälter 13 festgestellt oder aus der vom Benutzer eingestellten Härte und der mit dem Flügelradzähler 5 gemessenen Gesamt-Wassermenge errechnet werden. Dann wird aus dem Speicherbehälter 3 von der im Programmabschnitt Trocknen eingefüllten Wassermenge das Regeneriervolumen 22 über den zweiten Auslass in den Salzbehälter 24 geleitet, der weitere Regeneriervorgang ist weiter oben beschrieben. Nach dem Ablassen kann das Regeneriervolumen 22 zur weiteren Unterstützung der Trocknung nachgefüllt werden.

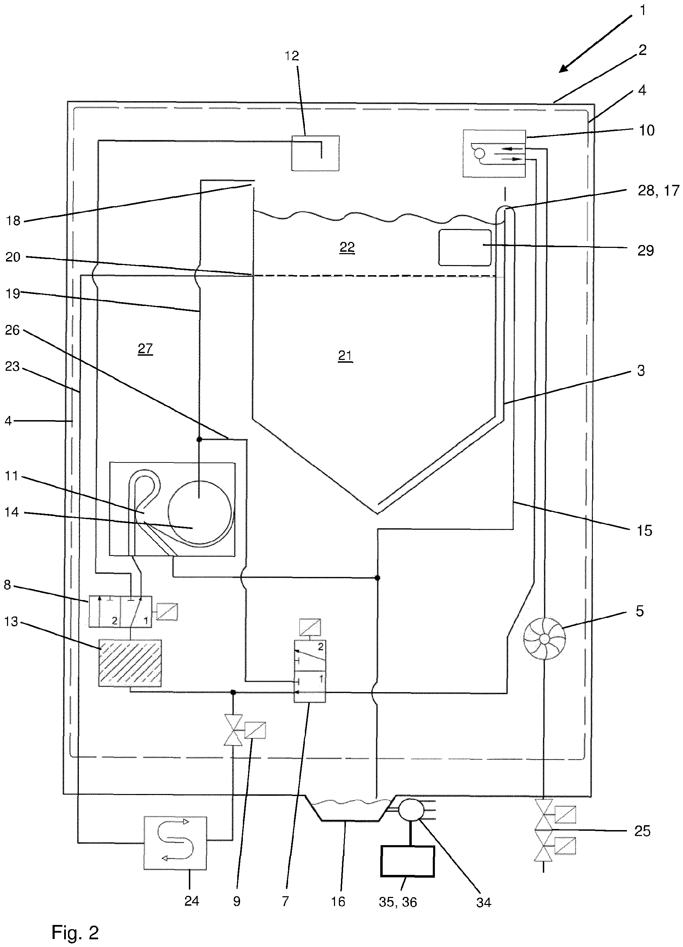

Figur 2 zeigt eine Ausführungsform einer Wassertasche 4, bei der das Speicherablaufventil 6 eingespart wird. Stattdessen ist der Speicherbehälter 3 mit einem Saugheber 28 als erstem Auslauf 17 ausgestattet. Als zusätzliches Bauteil ist ein Füllstandssensor 29 erforderlich, der die vollständige Befüllung des Speicherbehälters 3 bis zum maximalen Regeneriervolumen 22 ermittelt. Wenn nun der Speicherbehälter 3 über das Regeneriervolumen 22 hinaus befüllt wird, sorgt der Saugheber für eine vollständige Entleerung des Speicherbehälters 3 in den Sammeltopf 16. Der Überlauf 18 muss hier über dem Arbeitsniveau des Saughebers 28 liegen. Er dient lediglich als Sicherheit, wenn der Saugheber 28 verstopft ist. Eine weitere Änderung gegenüber der Ausführungsform gemäß Figur 1 besteht darin, dass hier die Leitung 26 vom ersten Umschaltventil 7 (Stellung "2") nicht zur dritten Wasserschutzeinrichtung 12, sondern zur zweiten Wasserschutzeinrichtung 11 verlegt ist, wie bereits vorbeschrieben. Dadurch kann der Spülraum 2 direkt mit Frischwasser befüllt werden.

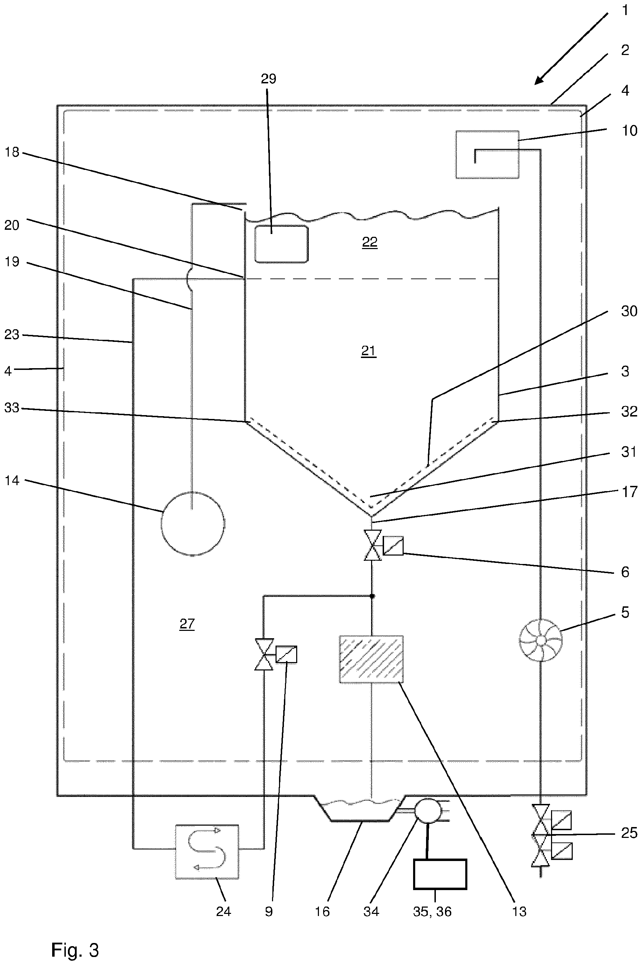

Bei der in Figur 3 dargestellten Wassertasche 4 kann der Speicherbehälter 3 nur mit nicht enthärtetem Frischwasser aus der Hauswasserversorgung gefüllt werden. Des Weiteren wird in den Spülraum 2 nur Wasser eingeleitet, welches sich zuvor im Speicherbehälter 3 befunden hat. Auf diese Weise entfallen die beiden Umschaltventile 7 und 8 und die dritte Wasserschutzeinrichtung 12. Auch auf die zweite Wasserschutzeinrichtung 11 kann verzichtet werden, hier kann das Wasser aus dem Überlauf 18 des Speicherbehälters 3 direkt in die Öffnung zur Spülraumbelüftung 14 geleitet werden. Als zusätzliches Bauteil ist wie bei der Ausführungsform nach Figur 2 der Füllstandssensor 29 vorhanden. Dieser sensiert auch die vollständige Befüllung des Speicherbehälters 3 bis zum maximalen Regeneriervolumen 22. Außerdem ist der Speicherbehälter 3 im Bodenbereich über dem ersten Auslass mit einem Sieb 30 versehen. Da der Speicherbehälter 3 mit nicht enthärtetem und demzufolge kalkhaltigem Frischwasser gefüllt ist, kann es bei einer Erwärmung und langen Standzeiten des Wassers zu Kalkausfällungen kommen. Damit der Kalk nun nicht das nachfolgende Speicherablaufventil 6 und ein Sieb (nicht dargestellt) im Harzbehälter 13 zusetzt, wird zur Vorfilterung der Einsatz eines großflächigen Siebes 30 in dem Speicherbehälter 3 vorgeschlagen. Vorteilhaft ist dieses Sieb 30 in V-Form ausgebildet, wodurch eine sogenannte Kalkrückhaltetasche 31 entsteht, welche in der Lage ist den ausfallenden Kalk über die gesamte Lebensdauer des Gerätes zu speichern. Rechts und links am Siebanfang sind sogenannte Bypasskanäle 32 und 33 vorhanden, die auch bei einem komplett verstopften Sieb 30 einen Abfluss aus dem Speicherbehälter 3 ermöglichen. Das Sieb 30 ist vorzugsweise entnehmbar und kann dann gereinigt werden.

Der Wassereinlauf zum Speicherbehälter 3 erfolgt aus der Hauswasserversorgung über das Wassereinlaufventil 25. Mit einem Flügelradzähler 5 wird die zugelaufene Wassermenge ermittelt. Es schließt sich die erste Wasserschutzreinrichtung 10 an. Im oberen Bereich befindet sich der Überlauf 18, durch den bei Überschreitung des maximalen Füllstandes das überlaufende Wasser über die Spülraumbelüftung 14 in den Spülraum 2 fließt. Um enthärtetes Weichwasser in den Sammeltopf 16 des Spülraums 2 zu bringen, wird das Speicherablaufventil 6 geöffnet, wobei dann das Wasser über Schwerkraft durch den Harzbehälter 13 in den Sammeltopf 16 fließt. Zum Entleeren des Speicherbehälters 13 wird das Speicherablaufventil 6 geöffnet und der Speicherinhalt (Flottenvolumen 21 plus Regeneriervolumen 22) fließt enthärtet in den Sammeltopf. Durch Nachfüllen und Entleeren des Speicherbehälters kann somit der gesamte Wassereinlauf mit Weichwasser erfolgen. Wenn zur Glasschonung hartes Frischwasser beigemischt werden soll, muss zunächst der Speicherbehälter 3 befüllt und anschließend überfüllt werden. Dann fließt Frischwasser über den Überlauf 18 und die Spülraumbelüftung 14 in den Spülraum 2.

Zum Regenerieren des Ionenaustauscherharzes im Harzbehälter 13 wird das Regeneriervolumenen durch Öffnen des Regenerierventils 9 aus dem gefüllten Speicherbehälter 3 abgezweigt und fließt mittels Schwerkraft durch den Salzbehälter 24 und anschließend als Sole durch den Harzbehälter 13. Von da wird es in den Sammeltopf 16 geleitet. Das anschließende Durchspülen des Harzbehälters 13 erfolgt bei geöffnetem Speicherablaufventil 6 durch Öffnen des Wassereinlaufventils 25 über den Flügelradzähler 5, die erste Wasserschutzeinrichtung 10 und den Speicherbehälter 3.

Durch die vorbeschriebene Ausbildung der Wassertasche 4 sind folgende Wasserwege möglich:
1. Befüllung des Speicherbehälters 3 mit Frischwasser - Wassereinlaufventil 25 geöffnet;
2. Befüllung des Speicherbehälters 3 mit enthärtetem Weichwasser - nicht möglich;
3. Befüllung des Spülraums 2 mit enthärtetem Weichwasser - Wassereinlaufventil 25 geöffnet, Speicherablaufventil 6 geöffnet;
4. Direkte Befüllung des Spülraums 2 mit Frischwasser - Wassereinlaufventil 25 geöffnet, Überfüllung des Speicherbehälters 3;
5. Regenerieren des Ionenaustauscherharzes - Speicherbehälter 3 gefüllt, Regenerierventil 9 geöffnet, Speicherablaufventil 6 geschlossen;
6. Entleeren des Speicherbehälters 3 in den Spülraum 2 - Speicherablaufventil 6 geöffnet.

Der Verfahrensablauf, bei dem der Speicherbehälter 3 gefüllt und anschließend das gespeicherte Wasser verwendet wird, erfolgt analog zu dem in Zusammenhang mit der Figur 1 beschriebenen Konzept.

Da bei diesem Konzept der gesamte Weichwassereinlauf über den Speicherbehälter 3 erfolgt, wird die dafür benötigte Zeit deutlich verlängert gegenüber einem Wassereinlauf, bei dem wie in Figur 1 beschrieben, der Spülraum 2 wenigstens teilweise mit unter Leitungsdruck stehendem Wasser gefüllt wird. Faktoren, die die Einlaufzeit beeinflussen sind neben dem fehlenden Druck Widerstände von Leitungen, Ventilen und Enthärtungseinrichtung und die sinkende geodätische Höhe des Wasserpegels im Behälter 3. Es ist deshalb anzustreben den Wasserpegel möglichst lange auf hohem Niveau zu belassen, um wenigstens den letztgenannten Einflussfaktor so weit wie möglich zu kompensieren. Hierfür ist der Speicherbehälter 3 mit dem Füllstandssensor 29 ausgestattet. Soll nun beispielsweise ein Wassereinlauf mit einer Menge von insgesamt 41 stattfinden (der Speicherbehälter 3 ist bereits mit einer Teilmenge zwischen 40% und 70 % der benötigten Gesamt-Flüssigkeitsmenge, im vorliegenden Fall sind dies 2,5 Liter, aus letztem Programmschritt gefüllt), dann wird zunächst das Speicherablaufventil 6 für eine Zeit geöffnet, in der nur ein Bruchteil des Speicherbehälterinhalts in den Sammeltopf 16 entleert wird, sinnvoll sind 20% bis 40%, insbesondere 30% des Speicherbehältervolumens, d. h. ca. 0,75 Liter. Die hierzu notwendige Ventilöffnungszeit kann in Versuchen ermittelt und in der nicht dargestellten Gerätesteuerung hinterlegt werden. Anschließend wir der Speicherbehälter 3 wieder befüllt bis der Füllstandssensor 29 anspricht. Der Flügelradzähler 5 ermittelt die nachgetankte Wassermenge. Wenn diese nicht den gewünschten 0,75 Litern entspricht, kann die Gerätesteuerung die Ventilöffnungszeit für den nächsten Teilentleerungsvorgang korrigieren. Das vorbeschriebene Teilentleeren und Nachtanken wird solange fortgesetzt bis die gewünschte Gesamtwassereinlaufmenge abzüglich des Speicherbehälter-Gesamtvolumens eingelaufen ist. Anschließend wird das Speicherablaufventil 6 solange geöffnet bis der Speicherbehälter 3 vollständig leergelaufen ist.

Um den Einfluss des langsamen Wassereinlaufs auf die Programmlaufzeit weiter zu verringern, kann bei einem Haushaltgerät, bei dem ein Flüssigkeitskreislauf mit Hilfe einer Umwälzpumpe 34 erzeugt wird, diese schon vor dem vollständigen Entleeren des Speicherbehälters 3 eingeschaltet werden. Dabei sollte vermieden werden, dass die Umwälzpumpe 34 bei einem niedrigen Flüssigkeitsniveau im Sammeltopf 16 Luft ansaugt und Schlürfgeräusche verursacht. Hierzu ist eine Pumpe 34 notwendig, deren Drehzahl gesteuert oder geregelt werden kann. Diese kann dann vozugsweise nach dem Einlaufen einer Teilwassermenge den Umwälzbetrieb mit einer niedrigen Drehzahl beginnen und anschließend die Drehzahl linear oder schrittweise erhöhen. Die notwendige Drehzahl-Anstiegsgeschwindigkeit kann vorher in Versuchen an die Auslaufgeschwindigkeit des Speicherbehälters 3 angepasst werden, bei drehzahlsteuerbaren Pumpen ist dieses einfache Verfahren vorteilhaft. Ein entsprechendes Drehzahlprofil kann dann in einer Steuerungseinrichtung 35 hinterlegt werden, welche vorzugsweise in eine in den Figuren nicht dargestellte Gerätesteuerung integriert ist. In einer zweiten Variante kann die Drehzahlsteigerung niveaugesteuert vorgenommen werden. Hierzu wird in vorteilhafter Weise eine Pumpe 34 mit drehzahlregelbarem Antrieb eingesetzt werden. Dann kann aus der Regelabweichung des Antriebs das Flüssigkeitsniveau im Sammeltopf 16 ermittelt werden und die Drehzahl daran angepasst gesteigert werden. Die notwendige Regelungseinrichtung 36 kann ebenfalls in die nicht dargestellte Gerätesteuerung integriert sein. Durch eine der vorgeschriebenen Maßnahmen kann bereits beim Wassereinlauf mit dem Umwälzen und dem Aufheizen der Spülflüssigkeit begonnen werden. Das vorbeschriebene Einschalten der Umwälzpumpe vor dem vollständigen Entleeren des Speicherbehälters 3 kann auch bei den Varianten gemäß Figur 1 und Figur 2 eingesetzt werden.

### Bezugszeichenliste:

- 1.: Spülmaschine
- 2.: Spülraum
- 3.: Speicherbehälter
- 4.: Wassertasche
- 5.: Flügelradzähler
- 6.: Speicherablaufventil
- 7.: EGS-Ventil
- 8.: Wassereinlassventil 2
- 9.: Regenerierventil
- 10.: Wasserschutzeinrichtung 1
- 11.: Wasserschutzeinrichtung 2
- 12.: Wasserschutzeinrichtung 3
- 13.: Harzbehälter
- 14.: Spülraumbelüftung
- 15.: Schlauchverbindung Speicherbehälter - Sammeltopf
- 16.: Sammeltopf
- 17.: erster Auslauf des Speicherbehälters
- 18.: Überlauf
- 19.: Schlauchverbindung Überlauf - Spülraumbelüftung
- 20.: zweiter Auslauf des Speicherbehälters (Regeneriervolumen)
- 21.: Flottenvolumen
- 22.: Regeneriervolumen
- 23.: Schlauchverbindung zweiter Auslauf - Salzbehälter
- 24.: Salzbehälter
- 25.: Wassereinlaufventil
- 26.: Schlauchverbindung erstes Umschaltventil - Wasserschutzeinrichtung 3
- 27.: Spülraumseitenwand
Nur Figur 2
- 28.: Saugheber
- 29.: Füllstandssensor

Nur Figur 3
- 30.: Sieb
- 31.: Kalkrückhaltetasche
- 32.: Bypasskanal
- 33.: Bypasskanal

Wieder alle Figuren
- 34.: Umwälzpumpe
- 35.: Steuereinrichtung
- 36.: Regelungseinrichtung

## Patentansprüche

1. Verfahren zum Füllen eines Behandlungsraums (2) eines wasserführenden Haushaltgeräts, insbesondere einer Geschirrspülmaschine (1), mit einer Gesamt-Flüssigkeitsmenge, wobei die Flüssigkeit über einen Speicherbehälter (3) dem Behandlungsraum (2) zugeleitet wird und wobei der Speicherbehälter (3) lediglich einen Teil der in den Behandlungsraum (2) gefüllten Gesamt-Flüssigkeitsmenge fasst, **gekennzeichnet durch** folgende Verfahrensschritte:
a) wenigstens annähernd vollständiges Füllen des Speicherbehälters (3);
b) Entleeren einer Teilmenge des Speicherbehälters (3) in den Behandlungsraum (2);
c) Auffüllen der entleerten Teilmenge;
d) gegebenenfalls Wiederholen der Verfahrensschritte b) und c), bis sich die Gesamt-Flüssigkeitsmenge abzüglich des Speicherbehältervolumens im Behandlungsraum (2) befindet;
e) vollständiges Entleeren des Speicherbehälters (3) in den Behandlungsraum (2).

2. Verfahren nach Anspruch 1,
**dadurch gekennzeichnet,**
**dass** das wenigstens annähernd vollständige Füllen des Speicherbehälters (3) durch einen Füllstandssensor (29) überwacht wird.

3. Verfahren nach Anspruch 1 oder 2,
**dadurch gekennzeichnet,**
**dass** das Entleeren der Teilmenge des Speicherbehälters (3) in den Behandlungsraum (2) zeitgesteuert erfolgt.

4. Verfahren nach Anspruch 3,
**dadurch gekennzeichnet,**
**dass** das Auffüllen der entleerten Teilmenge mittels einer Mengenmesseinrichtung (5) überwacht wird, und dass abhängig von der ermittelten Auffüllmenge die Zeit zum Entleeren der Teilmenge korrigiert wird.

5. Verfahren nach mindestens einem der vorhergehenden Ansprüche,
**dadurch gekennzeichnet,**
**dass** der Speicherbehälter (3) zwischen 40% und 70 % der Gesamt-Flüssigkeitsmenge fasst.

6. Verfahren nach mindestens einem der vorhergehenden Ansprüche,
**dadurch gekennzeichnet,**
**dass** die aus dem Speicherbehälter (3) entleerte Teilmenge zwischen 20% und 40% des gesamten Speicherbehältervolumens beträgt.

7. Verfahren nach Anspruch 6,
**dadurch gekennzeichnet,**
**dass** die aus dem Speicherbehälter (3) entleerte Teilmenge ca. 30% des gesamten Speicherbehältervolumens beträgt.
